(19) Europäisches Patentamt
European Patent Office
Office européen des brevets

(11) **EP 3 203 177 B1**

(12) **EUROPEAN PATENT SPECIFICATION**

(45) Date of publication and mention
of the grant of the patent:
**23.10.2019 Bulletin 2019/43**

(51) Int Cl.:
*F28G 13/00* *(2006.01)*       *F28D 7/16* *(2006.01)*
*F28F 21/08* *(2006.01)*

(21) Application number: **15847874.3**

(86) International application number:
**PCT/JP2015/077767**

(22) Date of filing: **30.09.2015**

(87) International publication number:
**WO 2016/052634 (07.04.2016 Gazette 2016/14)**

(54) **POLYMER MANUFACTURING APPARATUS**

VORRICHTUNG ZUR POLYMER HERSTELLUNG

DISPOSITIF DE FABRICATION DES POLYMERS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2014 JP 2014201472**

(43) Date of publication of application:
**09.08.2017 Bulletin 2017/32**

(73) Proprietor: **Nanotec Co., Ltd.
Kashiwa-City
Chiba 277 0861 (JP)**

(72) Inventor: **HARUYAMA, Hideyuki
Chiba 2700021 (JP)**

(74) Representative: **Gill Jennings & Every LLP
The Broadgate Tower
20 Primrose Street
London EC2A 2ES (GB)**

(56) References cited:
**EP-A1- 0 608 640        JP-A- H04 332 396
JP-A- H06 199 912        JP-A- S54 152 261
JP-A- S61 168 797        JP-A- 2009 062 552
JP-A- 2013 011 437        JP-U- S61 121 393
US-A- 4 237 968        US-A- 4 871 014
US-A1- 2014 038 118**

## Description

[Technical Field]

The present invention relates to a Polymer manufacturing apparatus according to the preamble of claim 1. Such an apparatus is known from document EP 0 608 640 A1.

More specifically, the present invention relates to a solution conveying and cooling apparatus that can readily and efficiently remove polymer fouling and the like that occurs in the production of polymer products such as polyethylene, and polypropylene. Polymer fouling is a deposit of polymer that forms on the inner wall of a polymer reactor which produces polyethylene by, for example, causing a reaction between a catalyst and ethylene in a solvent such as normal hexane, or, a deposit of polymer that accumulates on the inner wall of conveying means for cooling and conveying a liquid mixture of a solvent and a polymer product from the polymer reactor to an after treatment apparatus such as a pelletizer.

[Background Art]

In the polymerization of polyethylene or the like, reaction heat is generated by the polymerization reaction inside the polymer reactor. This reaction heat must be efficiently removed, i.e., cooled, otherwise the operating conditions will be uncontrollable, which may cause significant changes in the physical properties of the polymerization reaction material and in some cases the operation of the polymer reactor may have to be stopped.

In order to remove the reaction heat, a shell and tube heat exchanger is sometimes installed in conveying means for cooling and conveyance from the inner wall of the polymer reactor and the polymer reactor to an after treatment apparatus such as a pelletizer. In this case, a polymer fouling deposit forms on the inner wall of the metal tube that separates a cooling medium from the polymer contained in the solvent. Since the polymer fouling deposit has a heat conductivity that is lower by about two digits than that of the metal tube, such polymer fouling deposits significantly reduce the efficiency of removal of the reaction heat, i.e., the cooling efficiency. At the same time, the load of the transfer pump will increase, as the pipe diameter is substantially reduced, which may cause adverse effects such as damage or flow rate reduction of the transfer pump.

Various propositions for preventing an increase in such polymer fouling include:

(1) Raising the flow speed inside the reactor and conveyor tubes;
(2) Reducing surface roughness of the reactor and conveyor tubes as much as possible;
(3) Adding an anti-electrostatic agent, based on a theory that electrostatic adhesion of catalyst and polymer particles causes the polymer fouling to start;
(4) Improving the structure of the ethylene feed nozzle; and
(5) Improving the structure for preventing a convection flow of polymer through gaps or the like at flanges (see, for example, Non Patent Literature 1).

A method has been proposed as one conventional technique for preventing polymer fouling, in which an anti-fouling agent is added, the agent containing a polyoxyethylene polymer having a number average molecular weight expressed by a specific general formula of not more than 30000, to a component of a solution of a solvent and polymer inside a polymerization apparatus or in a process afterwards (see, for example, Patent Literature 1).

Another method has been proposed as another conventional technique for preventing polymer fouling, which is a method for enabling continuous operation of an olefin polymerizer by preventing plugging in the system of feeding a catalyst slurry to the polymerization reactor. In the olefin polymerization method, a 0.3 to 3.0 mg organic aluminum compound is entrained in a catalyst slurry containing a preliminary polymerization catalyst carried on a solid per 1 g of this preliminary polymerization catalyst when feeding the catalyst slurry to a gas-phase reactor where main polymerization of olefin takes place (see, for example, Patent Literature 2).

As another conventional technique for preventing polymer fouling, a heat transfer device 10 has been proposed, which has an inner surface and an outer surface, and is provided for heating or cooling a process stream. The heat transfer device 10 is a tube made of a steel alloy containing three layers of X, Y, and Z. In order to impart corrosion resistance and corrosion-induced fouling resistance to the metal tube heat exchanger that is exposed to the high-temperature process stream, the tube - the heat transfer device 10 - includes three layers, which are a base layer formed from a steel alloy having a surface roughness Ra of less than 40 micro inch (1.1 $\mu$m), a Cr-enriched oxide layer containing 10 to 40 wt% chromium formed on at least one of the inner surface and outer surface, and a surface protection layer containing sulfide, oxide, oxysulfide, and mixtures thereof and formed on the surface of the Cr-enriched oxide layer (see, for example, Patent Literature 3).

Since the formation of polymer fouling cannot be prevented or reduced effectively enough to satisfy industrial demands even with the techniques described above, other methods and techniques have been proposed, one of which is to form a thin film by deposition on the inner wall of a metal tube, the thin film being removable by a solution or gas selected as required (see, for example, Patent Literature 4).

As another technique for preventing formation of polymer fouling, a de-scaling method has been proposed, in which a resin film is formed on the inner wall of a container where chemical or physical operations are performed, and scales formed on the container inner wall during these operations are removed together with the resin film (see, for example, Patent Literature 5).

As yet another technique for preventing formation of polymer fouling, an inner tube installation method for a piping system has been proposed, wherein a tube is set inside a pipe for conveying a fluid material that may be a liquid or a paste. The tube is passed through the pipe, and inflated by introducing air into the tube from one end, with the other end being closed, to make tight contact with the pipe, after which both ends of the tube are tightly attached to the ends of the pipe from the inside of the tube (see, for example, Patent Literature 6).

[Citation List]

[Non Patent Literature]

[NPL 1] "Textbook of Polyethylene Technology" written and edited by Kazuo Matsuura and Naotaka Mikami, published on July 1, 2001 by Kogyo Chosakai Publishing Co., Ltd.

[Patent Literature]

[PTL 1] Japanese Patent No. 5399478
[PTL 2] Japanese Patent Application Laid-open No. 2010-006988
[PTL 3] Japanese Patent Application Laid-open No. 2013-011437
[PTL 4] Japanese Patent Application Laid-open No. H10-204668
[PTL 5] Japanese Patent Application Laid-open No. H05-093001
[PTL 6] Japanese Patent Application Laid-open No. 2012-232512

[Summary of Invention]

[Technical Problem]

It is considered that polymer fouling can be removed, as shown in Non Patent Literature 1, physically by passing the fluid at high speed, or by forming a protection layer on the contact surfaces, or by preventing formation of stagnation points, or chemically by adding an anti-electrostatic agent, or the like.

In actuality, however, none of the countermeasures against polymer fouling disclosed in the patents mentioned above is satisfactory, and reduction in the cooling efficiency due to the polymer fouling, and reduction in the flow passage diameter, i.e., reduction in the flow rate, due to the polymer fouling continue to be a great hindrance in the industrial fields.

The techniques proposed in Patent Literatures 4 and 5 entail an issue that would be unacceptable in respect of quality control, since it is highly possible that the thin film or resin film formed in advance on the inner wall may dissolve or peel off due to changes in operating conditions or the like and mix in the newly produced polymer.

The technique proposed in Patent Literature 6 is assumed to be practically impossible to industrially carry out since it would be extremely difficult to mount the flexible inner tube that is stored in a coiled state into each of a bundle of cylindrical tubes of a conveying apparatus, which may have a total length of, for example, about 10 m.

In a polymer conveying and cooling apparatus determined by the present inventors as an actual example of a case where polymer fouling will occur, a tube bundle is formed by about 1500 cylindrical tubes made of SUS 304 and fixed at equal distance within a circular cross section of 170 cm diameter, each tube having an outer diameter of 25.4 mm, a thickness of 1.2 mm, and a length of 10 m.

This tube bundle is mounted entirely inside a pressure resistant shell, and a cooling medium is introduced under pressure from an inlet in a lower part in the shell to cause the cooling medium to flow between the bundled tubes. The cooling medium flows around each cylindrical tube and cools the liquid mixture of a solvent and a polymer inside each cylindrical tube.

Polymers are oversaturated by being cooled and separated from the solvent by precipitation, part of which deposits and grows on the tube wall and forms fouling. As a result, the flow rate of the constant pressure pump is reduced because of the reduction in the flow passage area of the cylindrical tube in which the liquid/solid mixture flows, whereupon normal operation is no longer possible.

This polymer conveying and cooling apparatus is a pressure vessel and regular inspections are made obligatory by regulations.

The polymer solution conveying and cooling apparatus described above is normally operated continuously for 24 hours. In this case, deposits of polymer fouling that precipitate and accumulate on the inner walls of cylindrical tubes will have exponentially increased after about 6 months to one year and will significantly hinder the flow of the polymer product solution. As a result, the discharge amount of the constant pressure pump will reduce and normal operation conditions can no longer be achieved, so the cooling apparatus must be stopped to remove the polymer fouling.

Such work of removing the polymer fouling in a polymer conveying apparatus, which is inevitable with conventional techniques, is achieved by hydroblasting in most industrial applications.

In hydroblasting, water pressurized by a reciprocating pump is propelled from a nozzle to peel off, pulverize, and discharge or remove the deposits of polymer fouling with the power of impact of the water jet.

The pressure of hydroblasting is as high as from 7 MPa to 30 MPa, as very high as from 30 MPa to 100 MPa, and sometimes as extremely high as from 100 MPa to 250 MPa. According to "Guidelines on industrial cleaning (hydrocleaning) safety sanitation management" issued by JAPAN WASH INC. Association, hydroblasting must be carried out before a supervisor by a worker who has a specified official approval, and a sturdy scaffold must be built for the work.

The cleaning of one polymer conveying and cleaning apparatus can take more than two weeks from the setup of the scaffold or the like until the end of the inspection. Moreover, the polymer production has to be stopped during the hydroblasting, which means a loss of revenue due to plant downtime, and therefore such cleaning is a hindrance that can greatly affect industrial activities.

(Objects of the invention)

The present invention was made in consideration of the problems described above associated with solution conveying and cooling apparatuses in polymer manufacturing lines and the like that have not been resolved yet by any of the conventional techniques. An object of the present invention is to provide a solution conveying and cooling apparatus that enables removal of a deposit of solid material, or a fouling deposit, inside the apparatus with very simple work equipment as compared to conventional techniques by few on-site workers in a short time without any dangerous work such as hydroblasting.

Another object of the present invention is to provide a solution conveying and cooling apparatus that reduces the possibility of unwanted deposits on tubes such as polymer being mixed in a solution such as a produced mixture of a liquid and a solid.

A further object of the present invention is to provide a solution conveying and cooling apparatus that produces a significantly reduced amount of industrial waste as compared to the amount of industrial waste produced by conventional hydroblasting techniques.

[Solution to Problem]

The present invention resides in

a polymer manufacturing apparatus including a polymerization reaction apparatus and a cooling passage (heat exchanger) connected to a polymer product outlet of the polymerization reaction apparatus, the polymer manufacturing apparatus being characterized in that

the cooling passage includes a liquid/solid mixture conveying apparatus, wherein a plurality of rigid outer tubes are arranged parallel to each other inside a rigid outer tube for a cooling medium, and

a thin inner tube is disposed inside each of the rigid outer tubes for mixture, this thin inner tube having an outer diameter smaller than an inner diameter of the rigid outer tube for mixture at normal temperature and pressure, expanding by an increase in at least one of temperature and pressure of a solution conveyed and, as a result, contacting with an inner surface of the rigid outer tube for mixture, and moreover contracting when the solution is cooled by the cooling medium or pressure is dropped, so that there is a space between an inner circumferential surface of said rigid outer tube for solution and said thin inner tube, wherein said thin inner tube is removable from said rigid outer tube so that, when removed, the thin inner tube may be subjected to a polymer fouling removal process.

[Advantageous Effects of Invention]

The liquid conveying and cooling apparatus of the present invention can provide the effect of safe removal of a deposit of solid material such as polymer or the like inside the liquid conveying apparatus with very simple work equipment as compared to conventional techniques by few workers in a short time.

The solution conveying and cooling apparatus of the present invention can also provide the effect of eliminating the risk of unwanted impurities such as existing polymer or the like that has adhered to the tube inner surface mixing in a fluid being conveyed and cooled such as a solution of newly produced polymer or the like.

The liquid conveying apparatus of the present invention can also provide the effect of significantly reducing the production of industrial waste as compared to conventional hydroblasting techniques.

Examples of applications where the liquid conveying apparatus of the present invention may be suitably embodied include: polymerization reaction in the polymer production, mixing of polymer with other components, desolventizing, and the production of compositions mainly composed of a polymer such as paints and adhesives.

The present invention may be applied to conveyance of a solution in the production of polymers such as methacrylate ester polymers such as poly(methyl) methacrylates, poly(ethyl) methacrylates, and poly(butyl) methacrylates, urethane polymers, polyvinyl chlorides, polyvinylidene chlorides, SBR, polyvinyl acetates, or copolymers of monomers constituting these, and can also favorably be applied to conveyance of a solution in the production of emulsions such as urethane emulsions, acrylic emulsions and the like.

(Embodiments of Invention)

The present invention is further characterized in that the thin inner tube is made of an SUS300-based stainless steel, an aluminum alloy, a copper alloy, and the like.

The present invention is further characterized in that the thin inner tube is press-joined to a thin inner tube support disc at an end.

The present invention is further characterized in that the solution is a solution mixture of a solvent and a polymer product.

[Brief Description of Drawings]

[Fig. 1]

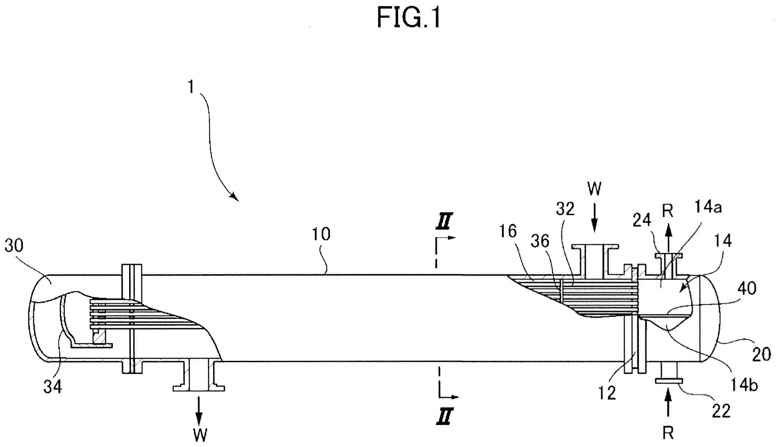

Fig. 1 is a partially cut-open front view of a solution conveying and cooling apparatus of a first embodiment.
[Fig. 2]

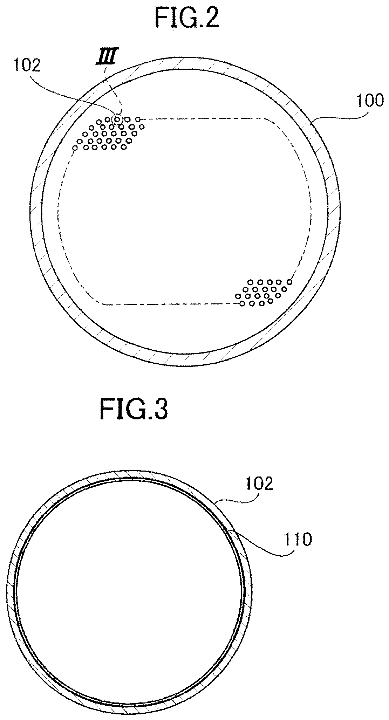

Fig. 2 is a cross-sectional view along line II-II of Fig. 1.
[Fig. 3]
Fig. 3 is an enlarged view of an area encircled with a dot line III in Fig. 2.
[Fig. 4]

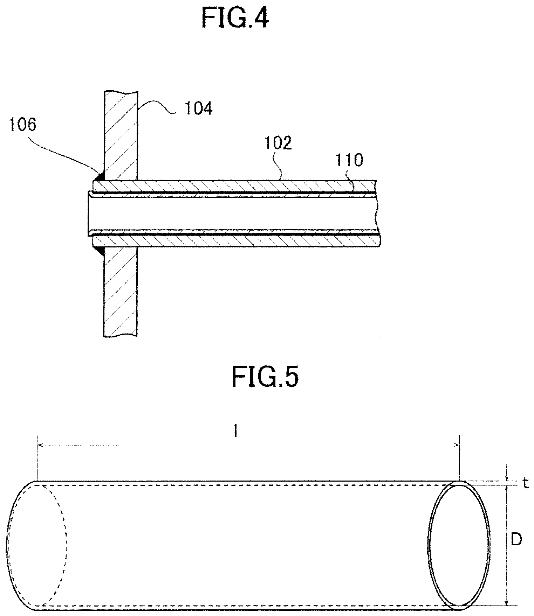

Fig. 4 is an illustrative diagram showing how the thin inner tube is fixedly attached to the rigid outer tube for solution.
[Fig. 5]
Fig. 5 is an illustrative reference diagram for explaining the principle of the present invention.

[Description of Embodiments]

The solution conveying and cooling apparatus of one embodiment of the present invention will now be described with reference to the drawings. Figures in the description of the embodiment are all given as examples.

The solution conveying and cooling apparatus 1 of the present invention is a shell and tube type apparatus used for a pressure vessel that has a heat exchange function and is used for carrying out low and medium pressure polyethylene polymerization. Three types of shell and tube heat exchangers are known: fixed tube sheet exchangers, floating head exchangers, and U-tube exchangers. The solution conveying and cooling apparatus 1 is a floating head exchanger, which absorbs expansion and contraction of elongated heat exchange tubes caused by high temperature and high pressure of fluid with which heat exchange takes place by displacement of a floating head cover.

The solution conveying and cooling apparatus 1 has a heat exchanging fluid chamber 14 and a cooling medium chamber 16 formed by partitioning the interior of the body, or a shell 10, with a tube sheet 12, as shown in Fig. 1.

The heat exchanging fluid chamber 14 that contains a fluid R with which heat exchange takes place is formed by closing one end of the shell 10 with a shell cover 20. In the part of the shell 10 where the heat exchanging fluid chamber 14 is located, a heat exchanging fluid inlet 22 is disposed on the lower side, and a heat exchanging fluid outlet 24 is disposed on the upper side. The heat exchanging fluid chamber 14 is divided by a partition 40 into a higher high-temperature part 14a and a lower low-temperature part 14b.

One example of the heat exchanging fluid R is a mixture of normal hexane and polymer.

The cooling medium chamber 16 that contains a cooling medium W such as cooling water is formed by closing one end of the shell 10 with a cooling medium chamber cover 30, and has about 2000 heat exchange tubes 32, for example, arranged parallel to each other inside. On the opposite side of the tube sheet 12 inside the cooling medium chamber 16 is disposed a floating head cover 34. Baffle plates 36 are arranged in the cooling medium chamber 16 for agitating the cooling medium W.

The heat exchange tubes 32 are configured in the solution conveying and cooling apparatus 1 as shown in Fig. 2: Rigid outer tubes for solution 102 made of SUS304 for passing a mixture solution containing a product substance dissolved in a solvent are arranged parallel to each other inside a rigid outer tube for a cooling medium 100 made of iron for passing a cooling medium.

The rigid outer tube for a cooling medium 100 has a length of 10 m in the cooling medium passage part. As shown in Fig. 3, the outer diameter is 25.4 mm, the thickness is 2.0 mm, and the inner diameter is 21.4 mm.

The rigid outer tubes for solution 102 are fixed by welds 106 to rigid outer tube support plates 104 fixedly attached inside near both ends of the rigid outer tubes for solution 102 as shown in Fig. 4.

Each of the rigid outer tubes for solution 102 has a thin inner tube 110 disposed inside as shown in Fig. 3 and Fig. 4. The thin inner tube 110 has an inner diameter of 21.30 mm and a thickness of 0.04 mm. Both ends of the thin inner tube 110 are fixedly attached to the ends of each rigid outer tube for solution 102 by press-joining as shown in Fig. 4.

Hereinafter, an explanation based on calculations will be given as to how the thin inner tube 110 expands by temperature and pressure of a solution being conveyed, for example a liquid mixture of reaction products and solvent, and makes contact with the inner surface of the rigid outer tube for solution 102 without rupture, and how the thin inner tube 110 contracts in diameter and returns to its original size when pressure is reduced or when the solution is removed, as well as how the thin inner tube 110 is backed up by the rigid outer tube for solution 102, i.e., how the thin inner tube 110 is supported all around by the rigid outer tube for solution 102, when it expands by the temperature and pressure of the solution or a mixture of a liquid and a solid being conveyed.

The hoop stress, or circumferential tensile stress, $\sigma_i \text{N/m}^2$ of the thin inner tube 110 is:

$$\sigma_i = pD1/2t1 = PD/2t \ ... \ (1)$$

when the inner diameter is D mm, the thickness is t mm, the length is 1 mm, and the inner pressure is P Pascal as shown in Fig. 5, for example according to a description regarding "tensile stress working in a circumferential direction" in line 8 on page 70 of "Introduction to Material Mechanics" (written by Takashi Arimitsu) published on May 25, 2012 by Gijutsu-Hyohron Co., Ltd.

The allowable tensile stress of SUS304 is, according to JIS G4303, 194 MPa at 40°C, 180 MPa at 75°C, and 171 MPa at 100°C.

Taking into consideration that, in the high-temperature part 14a and low-temperature part 14b of a heat exchanging fluid chamber, which are commonly seen in industrial fields, the temperatures and pressures are 70°C and 57°C, and 1.20 MPa and 1.14 MPa, respectively, calculation is made using the following figures.

The thickness of the rigid outer tube for solution 102 is 2.0 mm. The inner diameter of the rigid outer tube for solution 102 is 21.40 mm. The thin inner tube 110 has an outer diameter of 21.37 mm. The thin inner tube 110 has a thickness of 0.04 mm. The internal pressure of the thin inner tube 110 is 1.20 MPa. The Young's modulus of SUS304 that is the material of the rigid outer tube for solution 102 and the thin inner tube 110 is 200 GPa.

The clearance or gap between the inner surface of the rigid outer tube for solution 102 and the outer surface of the thin inner tube 110 is 0.015 mm, a half of 0.03 mm.

(Thin inner tube in tight contact with the rigid outer tube for solution)

$$\text{Hoop stress } \sigma_i = PD/2t$$
$$= (1.2 \text{ MPa} \times 21.30 \text{ mm})/(2 \times 0.04 \text{ mm})$$
$$= 319.5 \text{ (MPa)}$$

Based on Hooke's Law,

$$\text{Strain } \varepsilon = \text{stress } \sigma_i/\text{Young's module}$$
$$= 319.5 \text{ MPa}/200 \text{ GPa}$$
$$= 0.0016 \ (0.16\%)$$

Therefore, the outer diameter of the thin inner tube 110 will be increased by the internal pressure by:

$$21.37 \text{ mm} \times 0.0016 = 0.034 \text{ mm}$$

This figure indicates the possibility of the thin inner tube 110 making tight contact with the rigid outer tube for solution 102 by the internal pressure.

(Rigid outer tube for solution backing up the expanding thin inner tube)

Let us assume that an internal pressure of 1.20 MPa is applied to the rigid outer tube for solution 102.

$$\text{Hoop stress } \sigma_i = PD/2t$$
$$= (1.2 \text{ MPa} \times 23.40 \text{ mm})/(2 \times 2.0 \text{ mm})$$
$$= 7.02 \text{ (MPa)}$$

Based on Hooke's Law,

$$\text{Strain } \varepsilon = \text{stress } \sigma_i/\text{Young's module}$$
$$= 7.02 \text{ MPa}/200 \text{ GPa}$$
$$= 0.000$$

Therefore, even if an internal pressure of 1.20 MPa is applied to the rigid outer tube for solution 102, the rigid outer tube for solution 102 will hardly expand and can back up the thin inner tube 110.

(Diameter reduction of thin inner tube)

The "0.2% proof stress" mentioned in "Research Report by Tokyo Metropolitan Industrial Technology Research Institute, No. 5, 2010" (page 78) and others refers to the residual strain being not more than 0.2% when a certain level of pressure is loaded and removed. According to this paper, SUS304 has a 0.2% proof stress of 314 MPa. That is, the proof stress (314 MPa) of SUS304 is higher than its yield stress. If, in this embodiment, the clearance between the rigid outer tube for solution 102 and the thin inner tube 110 is not more than 0.2%, the residual strain that may be caused by creep and metal fatigue will not exceed 0.2%. If the clearance between the rigid outer tube for solution 102 and the thin inner tube 110 is not more than 0.1%, the thin inner tube 110 will make tight contact with the rigid outer tube for solution 102 and be backed up by the rigid outer tube for solution 102, and will return to its original size after the pressure is removed.
Next, how the solution conveying and cooling apparatus 1 of the present invention is used will be described. First, the thin inner tube 110 is inserted into the rigid outer tube for solution 102. Since the thin inner tube 110 is as light as, for example, 514 g, and also since there is some space between the inner surface of the rigid outer tube for solution 102 and the outer surface of the thin inner tube 110, it can be easily inserted even though it is as long as, for example, 10 m. The inserted thin inner tube 110 may be used as is, but preferably, both ends of the thin inner tube 110 may be fixedly attached to both ends of the rigid outer tube for solution 102 by press-joining or the like.
When a polymer product is introduced into the thin inner tube 110 in this state, the thin inner tube 110 expands by the pressure from the polymer product and the entire circumferential surface of the thin inner tube 110 makes contact with the inner circumferential surface of the rigid outer tube for solution 102. As a result, the thin inner tube 110 is supported by the inner circumferential surface of the rigid outer tube for solution 102 all around. Furthermore, as the entire outer circumference of the thin inner tube 110 is in contact with the inner circumferential surface of the rigid outer tube for solution 102, the polymer product being conveyed inside the thin inner tube 110 can be efficiently cooled by the cooling medium flowing between the rigid outer tube for mixture 102 and the rigid outer tube for the cooling medium 100.
When continuous operation over a long time of the liquid/solid mixture conveying apparatus 1 has led to polymer fouling inside the thin inner tube 110, the flow of polymer product into the liquid/solid mixture conveying apparatus 1 is stopped. As the pressure returns to normal, the thin inner tube 110 reduces in diameter and returns to its size. As a result, a space is formed between the inner circumferential surface of the rigid outer tube for solution 102 and the outer circumferential surface of the thin inner tube 110, so that the thin inner tube 110 can be easily taken out from the rigid outer tube for solution 102.
The removed thin inner tube 110 is then subjected to a polymer fouling removal process in a place more suited for the operation such as a plant. The thin inner tube 110 after being cleared of the polymer fouling is inserted into the rigid outer tube for solution 102 by the method described above.

Preparing a spare thin inner tube 110 and replacing the thin inner tube 110 with polymer fouling with this spare thin inner tube 110 enables a safe operation of removing polymer fouling in high places in a short period of time and is very effective for improving the production efficiency of the polymer.

[Industrial Applicability]

The present invention can be carried out also in applications where pressure only varies and there are no large temperature changes as would be in pipes for pumping mineral oil from under the ground, and can eliminate the plugging efficiently.

[Reference Signs List]

| | |
|---|---|
| 1 | Solution conveying and cooling apparatus |
| 100 | Rigid outer tube for a cooling medium |
| 102 | Rigid outer tube for solution |
| 104 | Support plate for rigid outer tube for solution |
| 106 | Weld |
| 110 | Thin inner tube |

**Claims**

1. A polymer manufacturing apparatus (1) comprising a polymerization reaction apparatus and a heat exchanger having a cooling passage connected to a polymer product outlet of the polymerization reaction apparatus, wherein said cooling passage includes a rigid outer tube for a cooling medium (100) and a plurality of rigid outer tubes for solution (102) arranged parallel to each other inside the rigid outer tube for a cooling medium (100), and **characterized in that** a thin inner tube (110) is disposed inside each of said rigid outer tubes for solution (102), said thin inner tube (110) having an outer diameter smaller than an inner diameter of said rigid outer tube for solution (102) at normal temperature and pressure, expanding by an increase in at least one of temperature and pressure of a solution conveyed and, as a result, contacting with an inner surface of said rigid outer tube for solution (102), and moreover contracting in diameter, when said solution is cooled or pressure is dropped, so that there is a space between an inner circumferential surface of said rigid outer tube for solution (102) and said thin inner tube (110), wherein said thin inner tube (110) is removable from said rigid outer tube (102) so that, when removed, the thin inner tube (110) may be subjected to a polymer fouling removal process.

2. The polymer manufacturing apparatus according to claim 1, wherein said thin inner tube (110) is made of an SUS300-based stainless steel.

3. The polymer manufacturing apparatus according to claim 1, wherein said thin inner tube (110) is made of an aluminum alloy.

4. The polymer manufacturing apparatus according to claim 1, wherein said thin inner tube (110) is made of a copper alloy.

5. The polymer manufacturing apparatus according to claim 1, wherein said thin inner tube (110) is press-joined, at an end thereof, to said rigid outer tube for solution (102).

6. The polymer manufacturing apparatus according to claim 1, wherein said solution is a solution mixture of a solvent and a polymer product.

**Patentansprüche**

1. Polymerherstellungsvorrichtung (1), umfassend eine Polymerisationsreaktionsvorrichtung und einen Wärmetauscher mit einem Kühlkanal, der mit einem Polymerproduktauslass der Polymerisationsreaktionsvorrichtung verbunden ist, wobei

der Kühlkanal ein starres Außenrohr für ein Kühlmedium (100) und eine Mehrzahl starrer Außenrohre für Lösung (102) enthält, die parallel zueinander innerhalb des starren Außenrohrs für ein Kühlmedium (100) angeordnet sind, und **dadurch gekennzeichnet, dass**

ein dünnes Innenrohr (110) innerhalb jedes der starren Außenrohre für Lösung (102) angeordnet ist, wobei das dünne Innenrohr (110) einen Außendurchmesser aufweist, der kleiner als ein Innendurchmesser des starren Außenrohrs für Lösung (102) bei normaler Temperatur und normalem Druck ist und sich durch eine Erhöhung von mindestens einem der Temperatur und des Drucks einer geförderten Lösung ausdehnt und infolgedessen eine Innenfläche des starren Außenrohrs für Lösung (102) kontaktiert, und sich ferner im Durchmesser zusammenzieht, wenn die Lösung gekühlt wird oder Druck verringert wird, so dass es einen Raum zwischen einer Innenumfangsfläche des starren Außenrohrs für Lösung (102) und dem dünnen Innenrohr (110) gibt,

wobei das dünne Innenrohr (110) von dem starren Außenrohr (102) entfernbar ist, so dass, wenn es entfernt wurde, das dünne Innenrohr (110) einem Polymerverschmutzungsentfernungsprozess unterzogen werden kann.

2. Polymerherstellungsvorrichtung nach Anspruch 1, wobei das dünne Innenrohr (110) aus einem rostfreien Stahl auf SUS300-Basis besteht.

3. Polymerherstellungsvorrichtung nach Anspruch 1, wobei das dünne Innenrohr (110) aus einer Aluminiumlegierung besteht.

4. Polymerherstellungsvorrichtung nach Anspruch 1, wobei das dünne Innenrohr (110) aus einer Kupferlegierung besteht.

5. Polymerherstellungsvorrichtung nach Anspruch 1, wobei das dünne Innenrohr (110) an einem Ende mit dem starren Außenrohr für Lösung (102) pressverbunden ist.

6. Polymerherstellungsvorrichtung nach Anspruch 1, wobei die Lösung ein Lösungsgemisch aus einem Lösungsmittel und einem Polymerprodukt ist.

**Revendications**

1. Appareil de fabrication de polymère (1) comprenant un appareil de réaction de polymérisation et un échangeur de chaleur ayant un passage de refroidissement connecté à une sortie de produit de polymère de l'appareil de réaction de polymérisation, dans lequel

ledit passage de refroidissement comprend un tube externe rigide pour un milieu de refroidissement (100) et une pluralité de tubes externes rigides pour solution (102) disposés en parallèle les uns aux autres à l'intérieur du tube externe rigide pour un milieu de refroidissement (100), et

**caractérisé en ce que**

un tube interne mince (110) est disposé à l'intérieur de chacun desdits tubes externes rigides pour solution (102), ledit tube interne mince (110) ayant un diamètre externe plus petit qu'un diamètre interne dudit tube externe rigide pour solution (102) à température et pression normales, grandissant par une augmentation d'au moins une de la température et de la pression d'une solution transportée et, comme résultat, la mise en contact avec une surface interne dudit tube externe rigide pour solution (102), et de plus la contraction du diamètre, quand ladite solution est refroidie ou que la pression chute, de sorte qu'il y a un espace entre une surface circonférentielle interne dudit tube externe rigide pour solution (102) et ledit tube interne mince (110),

dans lequel ledit tube interne mince (110) peut être retiré dudit tube externe rigide (102) de sorte que, quand il est retiré, le tube interne mince (110) peut être soumis à un processus d'élimination d'encrassement de polymère.

2. Appareil de fabrication de polymère selon la revendication 1, dans lequel ledit tube interne mince (110) est constitué d'un acier inoxydable à base de SUS300.

3. Appareil de fabrication de polymère selon la revendication 1, dans lequel ledit tube interne mince (110) est constitué d'un alliage d'aluminium.

4. Appareil de fabrication de polymère selon la revendication 1, dans lequel ledit tube interne mince (110) est constitué d'un alliage de cuivre.

**5.** Appareil de fabrication de polymère selon la revendication 1, dans lequel ledit tube interne mince (110) est joint sous presse, à une de ses extrémités, audit tube externe rigide pour solution (102).

**6.** Appareil de fabrication de polymère selon la revendication 1, dans lequel ladite solution est un mélange de solution d'un solvant et d'un produit de polymère.

EP 3 203 177 B1

# FIG.1

# FIG.2

# FIG.3

# FIG.4

# FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0608640 A1
- JP 5399478 B
- JP 2010006988 A
- JP 2013011437 A
- JP H10204668 B
- JP H05093001 B
- JP 2012232512 A

**Non-patent literature cited in the description**

- **KAZUO MATSUURA ; NAOTAKA MIKAMI.** Textbook of Polyethylene Technology. Kogyo Chosakai Publishing Co., Ltd, 01 July 2001
- tensile stress working in a circumferential direction. **TAKASHI ARIMITSU.** Introduction to Material Mechanics. Gijutsu-Hyohron Co., Ltd, 25 May 2012, 70
- *Research Report by Tokyo Metropolitan Industrial Technology Research Institute,* 2010, 78